# EUROPÄISCHE PATENTSCHRIFT

(11) **EP 0 625 128 B1**
(45) Veröffentlichungstag und Bekanntmachung des Hinweises auf die Patenterteilung: **17.01.1996**
(21) Anmeldenummer: 93901570.7
(22) Anmeldetag: 13.01.1993
(51) Int. Cl.: C02F 3/30

(54) **VERFAHREN ZUR DENITRIFIKATION VON ABWASSER**
PROCESS FOR THE DENITRIFICATION OF SEWAGE
PROCEDE DE DENITRIFICATION DES EAUX USEES

(30) Priorität: 14.01.1992 AT 39/92
(43) Veröffentlichungstag der Anmeldung: 23.11.1994
(73) Patentinhaber: INGERLE, Kurt, A-6020 Innsbruck (AT)
(72) Erfinder: INGERLE, Kurt, A-6020 Innsbruck (AT)
(74) Vertreter: Hofinger, Engelbert, DDr.
(86) Internationale Anmeldenummer: AT9300003
(87) Internationale Veröffentlichungsnummer: WO9314036

(56) Entgegenhaltungen:
- EP-A- 0 284 976
- WO-A-83/00856
- AT-B- 318 503
- AT-B- 385 979
- CH-A- 667 449
- DD-A- 244 743
- DE-A- 3 714 370
- DE-A- 3 917 451
- KORRESPONDENZ ABWASSER, 33. Jahrgang, Nr. 11, heraus- gegeben November 1986 B. B HNKE et al. "Unterschied im Nitrifikations- und Denitrifikationsverhalten ein- und zweistufiger Belebungsanlagen"

## Beschreibung

Der Stickstoffelimination aus dem Abwasser kommt heute eine zentrale Bedeutung in der Abwasserreinigung, insbesondere der Reinigung von kommunalem Abwasser, zu. Sie erfolgt in Zwei sehr unterschiedlichen Schritten der Nitrifikation (N) und der Denitrifikation (DN).

Unter Nitrifikation versteht man die biochemische Oxydation von Ammonium (NH₄) zu Nitrat (NO₃) mit Hilfe der langsam wachsenden Bakterien Nitrosomonas und Nitrobacter, die nur in schwachbelastetem Belebtschlamm vorhanden sind.

Die Denitrifikation dagegen ist die Umwandlung von Nitrat in gasförmigen Stickstoff (N₂), der in die Atmosphäre entweicht. Sie wird im anoxen Milieu von Bakterien bewirkt, die auch den Abbau der organischen Substanzen herbeiführen. Diese Bakterien sind schnellwachsend und sowohl im schwach- als auch im hochbelasteten Belebtschlamm enthalten.

Für die Nitrifikation benötigt man einen schwach belasteten Schlamm mit hohem Schlammalter, für die Denitrifikation eignet sich ein hochbelasteter mit niedrigem Schlammalter besser. Die sehr unterschiedlichen Schlammeigenschaften sind in einer einstufigen Kläranlage nicht herstellbar, sondern nur in einer zweistufigen. Voraussetzung für die Erfindung ist somit die Verwendung einer Anlage, welche in einer ersten Stufe entsprechend hoher Belastung, also hohem Sauerstoffbedarf, und in einer zweiten Stufe entsprechend geringerem Sauerstoffbedarf belüftet werden kann.

Bei der Entwicklung der herkömmlichen Kläranlagen mit zweistufiger Biologie - auch beim A-B-Verfahren - stand die Entfernung der organischen C-Verbindungen (BSB) und die Nitrifikation des Ammoniums zu Nitrat im Vordergrund der Überlegungen. Bei der neulich vorgeschriebenen Nitratelimination durch Denitrifikation treten Probleme auf, da durch die hohe Abbauleistung der Hochlaststufe für die Denitrifikation in der Schwachlaststufe zu wenig leicht abbaubare organische Verbindungen übrig bleiben. Diesem Problem soll durch das vorliegende Verfahren insoferne entgegengewirkt werden, daS ein Teil des Nitrates in der Hochlaststufe denitrifiziert wird, was die Schwachlaststufe entsprechend entlastet. Im vorgesehenen Verfahren dient die Hochlaststufe demnach auch der Denitrifikation und nicht wie bei den üblichen zweistufigen biologischen Kläranlagen ausschließlich zur Oxydation von sauerstoffzehrenden Verbindungen.

Das Verfahren beruht also auf der Erkenntnis, daß hochbelasteter (=HL) Schlamm besser denitrifiziert als schwach belasteter (=SL) Schlamm. Darüberhinaus sedimentiert der HL-Schlamm sehr gut (niederer Schlammindex) und neigt selbst durch das bei der Denitrifikation erzeugte Gas nicht oder nur in geringem Ausmaß zur Schwimmschlammbildung.

AT-A-318 503 offenbart ein Verfahren zur Elimination von Stickstoff aus Abwasser in einer biologischen Abwasserreinigungsanlage mit zwei hintereinender geschalteten, je einen Belüftungsbehälter und ein nachgeschaltetes Absetzbecken enthaltenden Stufen mit Schlammrückführung. Das Ammonifizieren des organisch gebundenen Stickstoffs und die Denitrifikation des Nitrats laufen gleichzeitig unter anaeroben Bedingungen im Absetzbecken der ersten Stufe ab.

Die Erfindung löst die gestellte Aufgabe dadurch, daß als Hochlaststufe einer zweistufigen biologischen Kläranlage eine Einrichtung eingesetzt wird, bei welcher die Sedimentation des Belebtschlammes im selben Becken erfolgt, wie dessen intermittierend betriebene Belüftung ("Einbeckenbiologie"), und daß das in der Schwachlaststufe nitrifizierte Abwasser teilweise in die Hochlaststufe Zurückgepumpt wird.

In der Einbeckenbiologie sind in bekannter Weise die Anlageteile des Belebungsverfahrens (Belüftungs- und Absetzbecken sowie Schlammrückführung) in einem Becken vereint. Ein Betriebszyklus setzt sich der Reihe nach aus den drei Phasen "Belüften, Absetzen und Abziehen des Überstandswassers" zusammen. Während der Belüftungs- und Absetzphase ist der Ablauf aus der Einbeckenbiologie unterbrochen. Will man die SL-Stufe trotz dieser Unterbrechungen konstant beschicken und starke Spiegelschwankungen in der Einbeckenbiologie vermeiden, so muß man entweder mindestens zwei Einbeckenbiologien parallel betreiben oder während der Abflußunterbrechung die Einbeckenbiologie mittels einer Umgehungsleitung umgehen und den Kläranlagenzufluß in dieser Zeit direkt der SL-Stufe zuführen. Andernfalls wird der Kläranlagenzufluß während der Abflußunterbrechung in der Einbeckenbiologie gespeichert, was eine entsprechende Spiegelanhebung bewirkt. Man benötigt dann zum Abziehen des Überstandwassers einen schwimmenden Ablauf. Letzere Methode hat allerdings den Vorteil, daß mit der Einbeckenbiologie Tageszuflußspitzen ausgeglichen werden können.

In der als Hochlaststufe eingesetzten Einbeckenbiologie laufen der Reihe nach folgende Prozesse ab:

### Physikalische Prozesse:

- Vollständige Durchmischung des Beckeninhaltes während der Belüftungsphase,
- Sedimentation des Belebtschlammes nach Abstellen der Belüftung,
- Abziehen des Überstandswassers.

### Biochemische Prozesse:

- Aerobe Phase: Oxydation der leicht abbaubaren organischen Verbindungen. Bildung des Hochlastschlammes. Eventuell Teilnitrifikation bei Rückführung des SL-Überschußschlammes in die HL-Stufe.
- Anoxe Phase: Denitrifikation des Stickstoffs des rückgeführten Nachklärbeckenablaufes.
- Anaerobe Phase: Vorbereitung des Belebtschlammes zur biologischen Phosphorentfernung.

Im Zulauf zur Kläranlage ist normalerweise kein oder nur wenig Nitrat enthalten. Dieses wird erst in der Schwachlaststufe gebildet. Die Rückführung von nitrathältigem Wasser des Ablaufes der Nachklärung in die Hochlaststufe hat demnach den Zweck, dort Nitrat für die Denitrifikation zur Verfügung zu stellen.

Für die vorgesehene Rückführung des Ablaufes der Nachklärung (NK) zur HL-Stufe und guten Durchmischung mit diesem benötigt man ein kleines Pumpwerk. Es ist darauf zu achten, daß der nitrathältige Rücklauf möglichst wenig mit Sauerstoff (O₂) angereichert wird. Die Rücklaufmenge ist variabel zu gestalten, um sich den Anforderungen möglichst gut anpassen zu können. Es wird angestrebt, den Rücklauf so zu wählen, daß die hydraulische Belastung der HL-Stufe konstant ist. Bei kleinerem Gesamtzufluß ist der Rücklauf groß und umgekehrt. Bei Regenwetter wird der über die Trockenwettermenge hinausgehende Zufluß direkt in die SL-Stufe geleitet. Diese Regelung bewirkt, daß die Denitrifikation vom Zufluß abhängt. Diese Betriebsweise ist besonders interessant, wenn die pro Jahr eliminierte N-Fracht im Vordergrund steht.

Zur biologischen Phosphorelimination bietet sich eine Kombination des vorgeschlagenen Verfahrens z.B. mit dem bereits bekannten Phostripverfahren an, bei dem ein Teil des Belebtschlammes im Nebenstrom geführt wird. Der Belebtschlamm wird dann zu jenem Zeitpunkt aus der Hochlaststufe entnommen, wenn eine maximale Phosphorbelastung vorliegt. Darüberhinaus eignet sich der hochaktive Hochlaststufenschlamm besser zur Phosphoraufnahme als der wenig aktive der Schwachlaststufe.

Ein wesentlicher Unterschied zum A-B-Verfahren besteht auch darin, daß in der Hochlaststufe zur Erzielung einer hohen Denitrifikationsrate eine möglichst hohe Trockensubstanz angestrebt wird. Der erwünschte Belebungseffekt wird durch entsprechende Wahl der Belüftungszeit erzielt.

Als Vorteil dieses Verfahrens ist anzusehen, daß Beckenvolumen eingespart werden kann, was die Kosten senkt. Darüberhinaus kommen die bei zweistufigen Biologien zu erwartenden Vorteile wie z.B. stabile Betriebsweise etc. zum Tragen.

Sollten leichte Flocken aus der HL-Stufe abtreiben, hat dies keine negativen Folgen auf den Vorfluter, da ja die SL-Stufe noch nachgeschaltet ist. Ein weiterer Vorteil besteht darin, daß der Großteil des Überschußschlammes hoch aktiv ist, wodurch in der Faulung eine große Faulgasausbeute erzielt und die biologische Phosphorelimination begünstigt wird.

Einen besonderen Vorteil bietet das Verfahren dann, wenn eine konventionelle einstufige biologische Kläranlage mit Vorklärung überlastet ist bzw. auf Stickstoffentfernung umgerüstet werden muß. Die vorhandene Vorklärung wird dann durch einfache Anpassungen (Montage einer automatischen Zu- und Abflußsteuerung sowie einer entsprechenden Belüftungseinrichtung bzw. Neubau von benötigten Becken) zu einer Einbeckenhochlastbiologie umgewandelt. Die so entstandene Hochlaststufe wird konstant mit Abwasser und Ablaufrückführung beschickt. Abwasser, das in der Hochlaststufe nicht aufgenommen werden kann, wird direkt der Schwachlaststufe zugeführt. Dies ist bei Tageszuflußspitzen, während des Belüftens und Vorabsetzens bei Betrieb nur eines Beckens, sowie bei Regenwetter erforderlich. Um die Nachklärung bei Regenwetter nicht hydraulisch zu überlasten, wird ab einem gewissen Regenwetterzufluß die Rückführung von Wasser des Kläranlagenablaufes eingestellt. Im Regenwetterfall wird auf eine Stickstoffeliminierung in der Hochlaststufe verzichtet.

Eine günstige Aufteilung der zu erbringenden Reinigungsleistungen besteht z.B. darin, daß der Hochlaststufe ca. 80 % der BSB5-Tagesfracht bei Trockenwetter zugeführt wird. Die Ablaufrückführung wird so gestaltet, daß ca. 50 % der erforderlichen Denitrifikation in der HL-Stufe erfolgt. In die Schwachlastbiologie gelangt dann über die Umgehung ca. 20 % und als Ablauf der HL-Stufe ca. 13 %, insgesamt somit ca. 33 % der BSB5-Fracht. In dieser Stufe wird dann 100 % der erforderlichen Nitrifikation und ca. 50 % der erforderlichen Denitrifikation erbracht. Zusätzlich wird der BSB5-Wert auf das erforderliche Maß reduziert.

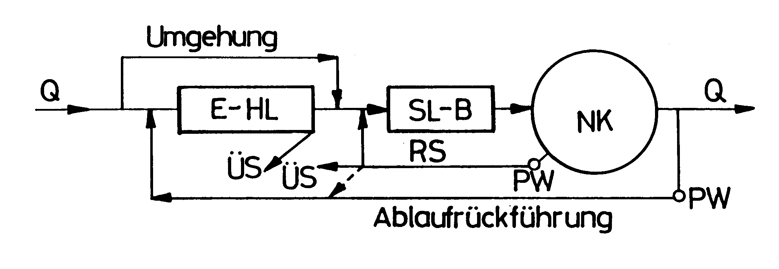

In der Zeichnung ist schematisch eine Einrichtung zur Durchführung des Verfahrens dargestellt. Sie besteht aus einer Einbeckenhochlastbiologie (E-HL) und einer Schwachlaststufe, bestehend aus einem Schwachlastbelebungsbecken (SL-B) mit nachgeschaltetem Absetzbecken (NK). Weiters sind die erforderlichen Leitungsführungen und Pumpwerke (PW) eingezeichnet. Mit Q wird der Kläranlagenzulauf und mit ÜS der Überschußschlamm bezeichnet. Durch die an sich bekannte Rückführung von Überschußschlamm aus der zweiten in die erste Stufe kann bereits in der ersten Stufe eine gewisse Nitrifikation erzielt werden.

## Patentansprüche

1. Verfahren zur Denitrifikation von Abwasser, dadurch gekennzeichnet, daß als Hochlaststufe einer zweistufigen biologischen Kläranlage eine Einrichtung eingesetzt wird, bei welcher die Sedimentation des Belebtschlammes im selben Becken erfolgt, wie dessen intermittierend betriebene Belüftung ("Einbeckenbiologie"), und daß das in der Schwachlaststufe nitrifizierte Abwasser teilweise in die Hochlaststufe zurückgepumpt wird.

2. Verfahren nach Anspruch 1, dadurch gekennzeichnet, daS die Einbeckenbiologie mit Speicherung des zufließenden Abwassers während der Belüftungs- und Absetzphase arbeitet.

3. Verfahren nach Anspruch 1, dadurch gekennzeichnet, daß mindestens zwei Einbeckenbiologiesysteme parallel geschaltet und so betrieben werden, daß ein Aufstau während der Belüftungs- und Absetzphase vermieden wird.

4. Verfahren nach Anspruch 1, dadurch gekennzeichnet, daß die Hochlaststufe hydraulisch möglichst konstant beschickt wird durch eine entsprechend angepaßte Rückführung des Nachklärbeckenablaufes und/oder durch Zuführung des überschüssigen Wassers in die Schwachlaststufe.

5. Verfahren nach einem der Ansprüche 1 bis 4, dadurch gekennzeichnet, daß in an sich bekannter Weise Überschußschlamm aus der Schwachlaststufe in die Hochlaststufe rückgeführt wird.

## Claims

1. A process for the denitrification of waste water characterised in that used as a high-load stage of a two-stage biological purification installation is an apparatus in which sedimentation of the activated sludge is effected in the same tank as its intermittently operated aeration ('single-tank biology') and that the waste water which is nitrified in the low-load stage is partially pumped back into the high-load stage.

2. A process as set forth in claim 1 characterised in that the single-tank biology operates with storage of the waste water of the feed flow during the aeration and settlement phase.

3. A process as set forth in claim 1 characterised in that at least two single-tank biology systems are connected in parallel and operated in such a way as to avoid an accumulation during the aeration and settlement phase.

4. A process as set forth in claim 1 characterised in that the high-load stage is hydraulically charged as constantly as possible by suitably adapted recycling of the post-purification tank discharge and/or by a feed of the excess water into the low-load stage.

5. A process as set forth in one of claims 1 through 4 characterised in that excess sludge is recycled from the low-load stage to the high-load stage in per se known manner.

## Revendications

1. Procédé de dénitrification d'eaux usées, caractérisé par le fait que l'on utilise comme étage à haute charge d'une installation d'épuration biologique à deux étages, un dispositif dans lequel la sédimentation des boues activées s'effectue dans le même bassin que leur aération intermittente ("biologie à un bassin") et que les eaux usées nitrifiées dans l'étage à faible charge sont partiellement ramenées par pompage dans l'étage à haute charge.

2. Procédé selon la revendication 1, caractérisé par le fait que l'épuration biologique à un bassin fonctionne avec retenue des eaux usées admises pendant la phase d'aération et de sédimentation.

3. Procédé selon la revendication 1, caractérisé par le fait qu'au moins deux systèmes biologiques à un bassin sont montés en parallèle et exploités de manière a éviter un refoulement pendant la phase d'aération et de sédimentation.

4. Procédé selon la revendication 1, caractérisé par le fait que l'étage a haute charge bénéficie d'une alimentation hydraulique aussi constante que possible par une remise en circulation adaptée de l'effluent du bassin de décantation finale et/ou par une amenée de l'eau excédentaire dans l'étage à faible charge.

5. Procédé selon l'une des revendications 1 à 4, caractérisé par le fait que les boues en excès de l'étage à faible charge sont ramenées dans l'étage à haute charge d'une manière connue en soi.
